# EUROPEAN PATENT APPLICATION

(11) **EP 4 525 361 A1**
(43) Date of publication of application: **19.03.2025**
(21) Application number: 23802732.0
(22) Date of filing: 04.05.2023
(51) Int. Cl.: H04L 9/40

(54) **DATA PROCESSING METHOD AND APPARATUS, CORE NETWORK NODE, ELECTRONIC DEVICE, AND STORAGE MEDIUM**

(30) Priority: 07.05.2022 CN 202210506786
(71) Applicant: Vivo Mobile Communication Co., Ltd., Dongguan, Guangdong 523863 (CN)
(72) Inventor: YU, Hang, Dongguan, Guangdong 523863 (CN); KANG, Yanchao, Dongguan, Guangdong 523863 (CN); WANG, Hui, Dongguan, Guangdong 523863 (CN)
(74) Representative: Cabinet Beaumont
(86) International application number: PCT/CN2023/092030
(87) International publication number: WO 2023/216960

(57) **Abstract**

This application relates to the field of communication technologies, and discloses a data processing method and apparatus, a core network node, an electronic device, and a storage medium. The data processing method in embodiments of this application includes: A first core network node receives a task request sent by an application function AF. The first core network node performs a process of sending target data to the AF. The target data is data obtained through a privacy protection.

## Description

### CROSS-REFERENCE TO RELATED APPLICATION

This application claims priority to Chinese Patent Application No. 202210506786.9 filed in China on May 7, 2022, which is incorporated herein by reference in its entirety.

### TECHNICAL FIELD

This application relates to the field of communication technologies, and in particular, to a data processing method and apparatus, a core network node, an electronic device, and a storage medium.

### BACKGROUND

To provide better services, an external third-party application function (Application Function, AF) may interact with a core network of the 3^{rd} generation partnership project (3rd Generation Partnership Project, 3GPP) to request, for example, terminal data, in the 3GPP network. However, when the AF needs some terminal data related to user privacy, the 3GPP network does not provide the data to the AF to ensure security and privacy protection. Because the AF cannot obtain sufficient data, the data demand of the AF is not satisfied. As a result, the AF cannot provide better services.

It may be learned that, a problem that an AF cannot provide better services as a result of a data demand of the AF being not satisfied exists in the related art.

### SUMMARY

Embodiments of this application provide a data processing method and apparatus, a core network node, an electronic device, and a storage medium, which can resolve a problem in the related art that an AF cannot provide better services as a result of a data demand of the AF being not satisfied.

According to a first aspect, a data processing method is provided. The method includes:

A first core network node receives a task request sent by an application function AF.

The first core network node performs a process of sending target data to the AF. The target data is data obtained through a privacy protection.

According to a second aspect, a data processing apparatus is provided. The apparatus includes:
a first receiving module, configured to receive a task request sent by an application function AF; and
a first sending module, configured to perform a process of sending target data to the AF, where the target data is data obtained through a privacy protection.

According to a third aspect, a data processing method is provided. The method includes:
A second core network node receives a first request sent by a first core network node. The first request includes indication information of a task request of an AF.

The second core network node performs a process of sending target data to the first core network node. The target data is data obtained through a privacy protection.

According to a fourth aspect, a data processing apparatus is provided. The apparatus includes:
a first receiving module, configured to receive a first request sent by a first core network node, where the first request includes indication information of a task request of an AF; and
a first sending module, configured to perform a process of sending target data to the first core network node, where the target data is data obtained through a privacy protection.

According to a fifth aspect, a first core network node is provided. The first core network node includes a processor and a memory. The memory stores a program or instructions executable in the processor. The program or the instructions, when executed by the processor, implement the method in the first aspect.

According to a sixth aspect, a first core network node is provided. The first core network node includes a processor and a communication interface. The communication interface is configured to: receive a task request sent by an application function AF; and perform a process of sending target data to the AF, where the target data is data obtained through a privacy protection.

According to a sixth aspect, a second core network node is provided. The second core network node includes a processor and a memory. The memory stores a program or instructions executable in the processor. The program or the instructions, when executed by the processor, implement the method in the third aspect.

According to a seventh aspect, a second core network node is provided. The second core network node includes a processor and a communication interface. The communication interface is configured to: receive a first request sent by a first core network node, where the first request includes indication information of a task request of an AF; and perform a process of sending target data to the first core network node, where the target data is data obtained through a privacy protection.

According to an eighth aspect, a communication system is provided. The communication system includes a first core network node and a second core network node. The first core network node may be configured to perform the data processing method in the first aspect. The second core network node may be configured to perform the data processing method in the second aspect.

According to a ninth aspect, a readable storage medium is provided. The readable storage medium stores a program or instructions. The program or the instructions, when executed by a processor, implement the method in the first aspect or implement the method in the third aspect.

According to a tenth aspect, a chip is provided. The chip includes a processor and a communication interface. The communication interface is coupled to the processor. The processor is configured to execute a program or instructions to implement the method in the first aspect or implement the method in the third aspect.

According to an eleventh aspect, a computer program/program product is provided. The computer program/program product is stored in a storage medium. The computer program/program product is executed by at least one processor, to implement the data processing method in the first aspect or implement the data processing method in the third aspect.

In embodiments of this application, the first core network node performs the process of sending the target data to the AF in a case that the first core network node receives the task request sent by the AF. The target data is the data obtained through the privacy protection. Because the target data is obtained through the privacy protection, the target data includes no privacy information. In this way, not only privacy security of the data can be ensured, but also a data demand of the AF is satisfied, thereby helping the AF provide better services based on the required data.

### BRIEF DESCRIPTION OF THE DRAWINGS

FIG. 1 is a block diagram of a wireless communication system according to an embodiment of this application;
FIG. 2 is a flowchart of a data processing method according to an embodiment of this application;
FIG. 3 is a block diagram of a specific wireless communication system according to an embodiment of this application;
FIG. 4 is a flowchart of data processing performed by the wireless communication system shown in FIG. 3 according to an embodiment of this application;
FIG. 5 is a structural diagram of a data processing apparatus according to an embodiment of this application;
FIG. 6 is a flowchart of another data processing method according to an embodiment of this application;
FIG. 7 is a structural diagram of another data processing apparatus according to an embodiment of this application;
FIG. 8 is a structural diagram of a communication device according to an embodiment of this application;
FIG. 9 is a schematic diagram of a hardware structure of a first core network node according to an embodiment of this application; and
FIG. 10 is a schematic diagram of a hardware structure of a second core network node according to an embodiment of this application.

### DETAILED DESCRIPTION

Technical solutions in embodiments of this application are clearly described below with reference to drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in the specification and the claims of this application are used to distinguish between similar objects rather than describe a specific order or sequence. It should be understood that the terms used in this way may be transposed where appropriate, so that embodiments of this application may be implemented in a sequence other than those illustrated or described herein. In addition, objects defined by "first" and "second" are generally of the same class and do not limit a quantity of obj ects. For example, one or more first objects may be arranged. In addition, "and/or" in the specification and the claims indicates at least one of connected objects, and a character "/" generally indicates an "or" relationship between associated objects.

It should be noted that, technologies described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. Terms "system" and "network" in embodiments of this application are usually interchangeably used, and the described technologies may be used for both the system and the radio technologies mentioned above, as well as for another system and radio technology. A new radio (New Radio, NR) system is described below as an example, and the term NR is used in most of the following description. Nevertheless, the technologies may be applied to applications other than applications of the NR system, such as a 6^{th} Generation (6^{th} Generation, 6G) communication system.

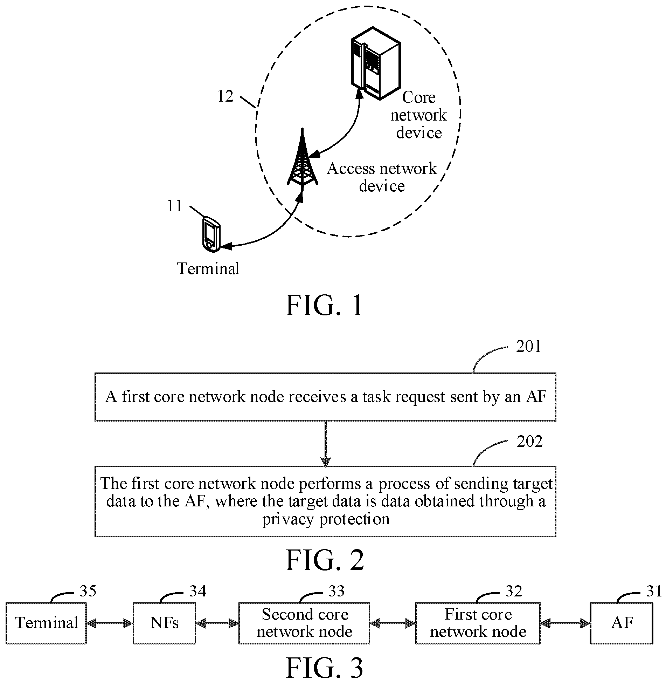

FIG. 1 is a block diagram of a wireless communication system to which embodiments of this application may be applied. The wireless communication system includes a terminal 11 and a network side device 12. The terminal 11 may be a terminal side device such as a mobile phone, a tablet computer (Tablet Personal Computer), a laptop computer (Laptop Computer), which is also referred to as a notebook computer, a personal digital assistant (Personal Digital Assistant, PDA), a palm computer, a netbook, an ultra-mobile personal computer (Ultra-Mobile Personal Computer, UMPC), a mobile internet device (Mobile Internet Device, MID), an augmented reality (augmented reality, AR)/virtual reality (virtual reality, VR) device, a robot, a wearable device (Wearable Device), an on-board device (Vehicle User Equipment, VUE), a pedestrian user equipment (Pedestrian User Equipment, PUE), smart home (a home device with a wireless communication function, such as a refrigerator, a television, a washing machine, or furniture), a game console, a personal computer (personal computer, PC), a teller machine, or a self-service machine. The wearable device includes a smart watch, a smart bracelet, a smart headset, smart glasses, smart jewelry (a smart wristlet, a smart chain bracelet, a smart ring, a smart necklace, a smart ankle, a smart ankle chain, and the like), a smart wristband, smart clothing, and the like. It should be noted that, a specific type of the terminal 11 is not limited in this embodiment of this application. The network side device 12 may include an access network device and a core network device. The access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, a Wi-Fi node, and the like, The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a household NodeB, a household evolved NodeB, a transmitting receiving point (Transmitting Receiving Point, TRP), or some other appropriate term in the field, as long as the same technical effect is achieved. The base station is not limited to a specific technical term. It should be noted that, in this embodiment of this application, only a base station in the NR system is used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), and an application function (Application Function, AF). It should be noted that, in this embodiment of this application, only a core network device in the NR system is used as an example for description, and a specific type of the core network device is not limited.

A data processing method and apparatus, a core network node, an electronic device, and a storage medium provided in embodiments of this application are described below in detail through some embodiments and application scenarios thereof with reference to the drawings.

Refer to FIG. 2. FIG. 2 is a flowchart of a data processing method according to an embodiment of this application. As shown in FIG. 2, the data processing method includes the following steps:
Step 201: A first core network node receives a task request sent by an AF.
Step 202: The first core network node performs a process of sending target data to the AF, where the target data is data obtained through a privacy protection.

The first core network node may include a core network element. The first core network node may be an existing core network element or another new core network element. This is not limited. When the AF can directly interact with a core network element, the first core network node may be a core network element. When the AF cannot directly interact with a core network element and needs to interact with a core network through an exposed node, the first core network node may be an exposed node of a core network. The exposed node is a node configured to expose a function, a capability, or information of the core network to the AF. For example, the exposed node is a node that exposes a core network capability such as a privacy protection function to the AF. The exposed node may be a network element in the core network responsible for exposing the function of the core network element to outside. The network element can expose the function, the capability, or the information of the core network to the outside, or transmit external information to inside of the core network. In an example, the exposed node may be an NEF, or may be another new core network element. Currently, the NEF can provide a secure information transmission means for both transmission from the inside of the core network to the outside of the core network and transmission from the outside of the core network to the inside of the core network. For ease of understanding, the first core network node in this embodiment of this application may be understood as a core network node that can directly interact with the AF.

The AF may be understood as a third-party network element outside the core network. The task request sent by the AF may be understood as a data request. When the AF needs to obtain data, the AF may send the task request to the first core network node to request the first core network node to provide data to the AF.

The target data may include data obtained through a privacy protection on terminal data, or may include data obtained through a privacy protection on network data. The terminal data may be understood as data collected by the core network from a terminal. The terminal data usually includes privacy information of a user, for example, user location information, user identity information, and trajectory information. The network data may be understood as data of the core network element collected by the core network.

The target data may be a piece of data or a result, or may be a set of data or a result queue. In an example, the target data may be data obtained through training on the user location information, which expresses user interests and hobbies. In this case, the target data may be understood as a result or a result queue of the user interests and hobbies, which does not include the privacy information of the user such as the user location information.

In the above steps, after receiving the task request sent by the AF, the first core network node does not directly send collected data to the AF, and instead, sends the target data obtained through the privacy protection on the data to the AF. Because the target data is obtained through the privacy protection, the target data includes no privacy information. In this way, not only privacy security of the data can be ensured, but also a data demand of the AF is satisfied, thereby helping the AF provide better services based on the required data.

It should be noted that, that the first core network node performs a process of sending target data to the AF may be that the first core network node directly sends the target data to the AF or that the first core network node performs a plurality of interactions with the AF to enable the AF to obtain the target data. "Send" involved in the following description may be direct sending or sending through a plurality of interactions. To avoid repetition, details are not described.

In this embodiment of this application, data collection may be achieved through a network element in the core network. In an example, an execution entity of the data collection may be a network function (NF), for example, a core network element, such as an AMF, an SMF, a PCF, a UDM, or a network data analytics function (Network Data Analytics Function, NWDAF). The privacy protection on the data may be performed by the first core network node or another node (including the core network element or the new core network element). To be specific, the first core network node may perform the privacy protection on the data to obtain the target data, and send the target data to the AF. Alternatively, the first core network node does not perform the privacy protection on the data, and instead, the another node performs the privacy protection to obtain the target data, and the first core network node obtains the target data from the another node performing the privacy protection, and sends the target data to the AF.

In an example, FIG. 3 is a block diagram of a specific wireless communication system. As shown in FIG. 3, the wireless communication system includes an AF 31, a first core network node 32, a second core network node 33, an NFs 34, and a terminal 35. The first core network node 32 may interact with the AF 31. The second core network node 33 is a node (which may be referred to as a privacy protection node) configured to perform a privacy protection on data, and may interact with the first core network node 32 and the NFs 34. The NFs 34 may interact with the terminal. The second core network node 33 may be understood as a unit in a core network with a specific privacy protection capability, which may be an enhanced NEF (enhanced NEF, e-NEF) element or a new core network element.

In an embodiment, before the first core network node receives a task request sent by the AF, the method further includes:
The first core network node obtains a privacy protection agreement with the AF. The privacy protection agreement includes one or more of the following:
an identifier of the AF;
privacy protection method indication information, where the privacy protection method indication information is used to indicate at least one privacy protection method;
data processing rule indication information, where the data processing rule indication information is used to indicate at least one data processing rule;
service demand indication information, where the service demand indication information is used to indicate at least one service demand;
sample indication information, where the sample indication information is used to indicate at least one sample collection parameter; and
quality of service (Quality of Service, QoS) requirement indication information, where the QoS requirement indication information is used to indicate at least one QoS requirement.

The AF may pre-negotiate the privacy protection agreement with the core network based on a service demand of the AF, to determine privacy protection methods that may be used by the core network or data or results on which a privacy protection is performed that may be provided by the core network to the AF. During the negotiation, a plurality of interaction messages may exist between the AF and the core network. A privacy protection agreement (agreement) supported by both the AF and the core network is determined through the negotiation process. The core network may pre-configure a relevant network element inside the core network based on the privacy protection agreement. In an example, the pre-configuration operation may be triggered by the first core network node, the NFs, the second core network node, or the like in FIG. 3.

In addition to one or more of the above items, the privacy protection agreement may further include a service charging policy, an identifier of the first core network nodes (such as an NEF identifier), and the like.

The above privacy protection method indication information may be expressed in a form of a list (list), which may be referred to as a privacy protection method list. The list includes one or more pieces of privacy protection method indication information. Correspondingly, other indication information may be expressed in the form of a list. Details are not described.

Further, the first core network node may determine validity of the task request of the AF based on the pre-negotiated privacy protection agreement. In an example, after receiving the task request sent by the AF, the first core network node may determine the validity of the task request through the NFs. If the task request is invalid, the first core network node may directly reject the task request. If the task request is valid, the first core network node may allocate a proper session identifier (such as a session ID or a correlation ID) for the task request. The session identifier is used to uniquely identify a current session between the AF and the core network. Then the first core network node may send a first request to the second core network node. The first request may include the session identifier and the task request.

Optionally, if a plurality of privacy protection nodes exist in the core network, the first core network node may query a privacy protection node registration list for a proper privacy protection node as the second core network node, and send the first request to the second core network node. The session identifier of the first request herein may further include an identifier of the first core network node, an identifier of the second core network node, and the like.

In some embodiments, after the first core network node obtains a privacy protection agreement with the AF, the method further includes:

The first core network node updates the privacy protection agreement with the AF.

When the core network changes, the core network may renegotiate the privacy protection agreement with AF. In this case, the first core network node may update the privacy protection agreement with the AF, and determine the validity of the task request of the AF based on the updated privacy protection agreement.

In this embodiment of this application, the task request sent by the AF may include one or more of the following:
the identifier of the AF, which may include an AF ID, information related to the privacy protection agreement, and the like;
a task identifier, which is used to indicate whether a current task request needs a privacy protection;
a task type, which is used to indicate whether the current task request is a periodic subscription request, an event-based subscription request, or a one-time request;
the privacy protection method indication information, which is used to indicate a method for performing a privacy protection on data, where the indicated privacy protection method is a pre-configured method known to both the core network and the AF, the AF may explicitly indicate the privacy protection method, and if the AF does not explicitly indicate the privacy protection method, the core network may use a default privacy protection method; and
specific content of the task request, which is used to describe specific things to be done in the current task.

Further, the specific content of the task request may include one or more of the following:
the data processing rule indication information, which is used to indicate a data processing rule, where the data processing rule may include an identifier of a data processing model, iteration performance of the data processing model, accuracy evaluation of the data processing model, a data processing function, a data processing formula, and the like;
the service demand indication information, which is used to indicate a purpose or a scenario (for example, an intelligent traffic scenario or a remote medical query scenario) for which the AF expects the core network to provide data or results;
the sample indication information, which is used to indicate how to collect data and data to be collected, and may include a sample type, a sample quantity, a sample precision, sample age, sample scope, a sample collection manner, and the like; and
the QoS requirement indication information, which may include a task priority requirement, a delay requirement, a QoS level requirement (for example, highest requirement, compromise allowed, and as best as possible).

In some embodiments, the target data includes:
data stored in a database that satisfies the task request and on which a privacy protection is performed; or
data obtained through a first privacy protection on first data, where the first data is data collected based on the task request, and the first privacy protection is a privacy protection method determined based on the task request.

When receiving the task request sent by the AF, the first core network node may first query a database (or a result library) to determine whether the database stores the data that satisfies the task request and on which the privacy protection is performed. If the database stores the data that satisfies the task request and on which the privacy protection is performed, the first core network node may directly obtain the data, and send the data to the AF as the target data, so that the AF can more efficiently obtain the data required by the AF. If the database does not store the data that satisfies the task request and on the which the privacy protection is performed, the core network needs to recollect data based on the task request, and perform a privacy protection on the collected data based on the task request. Then the first core network node sends the obtained target data to the AF.

In an example, the task request sent by the AF may be received by the first core network node, and the database may be queried by the second core network node. The database may be a database of the second core network node, or may be a database of the NFs (such as an NWDAF). If the database is the database of the NFs, the second core network node needs to initiate a query process to the NFs.

As described above, If the database does not store the data that satisfies the task request and on the which the privacy protection is performed, the core network needs to recollect the data based on the task request. Before the data recollection, a data collection scheme may be determined. If the AF and the core network pre-configure an explicit data collection scheme (for example, pre-configure an explicit data collection scheme in the privacy protection agreement), or the database has an explicit data collection scheme for the above task request, the data may be collected through the explicit data collection scheme. If no explicit data collection scheme is pre-configured, but a data collection scheme is provided in the task request, the second core network node may determine the data collection scheme based on the task request. If no explicit clear data collection scheme is pre-configured, and no data collection scheme is provided in the task request, the data may be collected in a manner internally implemented by the core network. The data collection scheme may include one or more of the following:
an NF list, which is used to indicate NFs from which data is to be collected, and includes NF identifiers, the AF ID, and the like;
a periodic requirement, which is used to indicate a periodic collection, an event-based collection, a one-time collection, or the like;
a data type;
a target terminal range, which is used to indicate terminals within a specific range for which information is to be collected, and includes a collection range, target terminals, and the like; and
data age, for example, a previous year, a previous hour, and a present time.

After determining the data collection scheme, the second core network node may perform the data collection. Specifically, the second core network node collects data from different network elements of the NFs. The network elements of the NFs complete the data collection and report the data to the second core network node. Then the second core network node may train the collected data, and perform a privacy protection on the data by using the privacy protection method. Therefore, the process of performing the privacy protection on the data to obtain the target data may be understood as data training. Before the data training, the second core network node may determine a training scheme. The training scheme may include one or more of the following:
training node information, which is used to indicate whether to perform training in the NFs or in the second core network node; and
a model training method.

It should be noted that, if the second core network node finds the target data that satisfies the requirement of the AF and is still valid by querying a local or another core network element, the second core network node may directly send a reply message to the first core network node. The first core network node sends the target data on which the privacy protection is performed to the AF based on the reply message, without a need to perform data collection and the data training.

This embodiment of this application is further described in combination with possible content included in the task request.

In some embodiments, the task request includes a task identifier. The task identifier is used to indicate whether the task request needs a privacy protection.

That the first core network node performs a process of sending target data to the AF includes:

The first core network node performs the process of sending the target data to the AF in a case that the task identifier indicates that the task request needs a privacy protection.

When the task request includes the task identifier indicating whether the privacy protection the task request needs a privacy protection, the first core network node may perform the process of sending the target data to the AF in a case that the task identifier indicates that the task request needs a privacy protection. In a case that the task identifier indicates that the task request does not need a privacy protection, the first core network node may perform a process of sending collected data to the AF. No privacy protection is performed on the collected data, so that the AF can more efficiently obtain the data required by the AF.

In some embodiments, the task request includes data processing rule indication information. The data processing rule indication information is used to indicate a data processing rule. The data processing rule is used to perform a privacy protection on data.

The target data includes:
the data obtained through the privacy protection performed based on the data processing rule.

The data processing rule may be understood as a rule for performing a privacy protection on data. The data processing rule may be in a form of a model, a neural network, an algorithm, a function, or a formula, or the like. The data processing rule indication information may be understood as a process description for describing the privacy protection method. Correspondingly, the data processing rule may be understood as the privacy protection method.

**In** this implementation, because the task request carries the data processing rule indication information, the privacy protection may be performed on the data based on the data processing rule indicated in the data processing rule indication information, to obtain the target data.

**In** an example, the second core network node may perform the privacy protection on the data based on the data processing rule, to obtain the target data. Then the second core network node sends a reply message to the first core network node. The reply message may be transmitted to the first core network node through a secure link. The reply message may include one or more of the following:
a session identifier, which may include a session identifier ID, an exposed node address, a privacy protection node address, and the like;
the identifier of the AF, which may include the AF ID, the information related to the privacy protection agreement, and the like;
a task identifier, which is used to indicate that a current reply includes the data on which the privacy protection is performed;
the data or the result obtained through the privacy protection, which includes data or a result that satisfies the requirement of the AF, that is, the target data; and
a message acknowledgement, for example, a reply acknowledgement (Acknowledgement, ACK), so that the AF determines whether the data provided by the core network satisfies the task request.

**In** some embodiments, the task request includes service demand indication information. The service demand indication information is used to indicate a service demand.

The target data includes:
data obtained through a privacy protection performed based on a target data processing rule. The target data processing rule is a data processing rule determined based on the service demand indication information.

Different from the previous implementation, in this implementation, the task request sent by the AF does not carry the data processing rule indication information, and instead, carries the service demand indication information. In this case, the data processing rule may be determined based on the service demand indication information, and the privacy protection may be performed on the data based on the determined data processing rule, to obtain the target data. In an example, the data processing rule may be determined by the second core network node based on the service demand indication information.

The target data processing rule may include at least one of the following:
a data processing rule stored in a database and indicated in the service demand indication information; and
a data processing rule determined based on a preset mapping rule and having a mapping relationship with the service demand indication information.

In an optional manner, the database may be first queried to determine whether the database stores the data processing rule indicated in the service demand indication information. If the database stores the data processing rule indicated in the service demand indication information, the privacy protection may be directly performed on the data by using the data processing rule.

In another optional determining manner, the target data processing rule may be determined based on the preset mapping rule. Specifically, the corresponding data processing rule is generated based on the service demand indication information. The set mapping rule may be a mapping rule pre-configured in the privacy protection agreement or a mapping rule pre-configured inside the core network. The mapping rule may be understood as a set which maps a task to the data processing rule satisfying the service demand indication information.

It should be noted that, if the above mapping from the service demand indication information to the data processing rule fails, indication information indicating that a reason for the failure is a task mapping failure is carried in a failure message.

In some embodiments, the task request includes task type indication information. The task type indication information is used to indicate that a task type includes at least one of a periodic task, an event-based task, and a one-time task.

The target data includes at least one of the following:
periodic data obtained through a privacy protection on data from a periodic collection in a case that the task type indicated in the task type indication information is the periodic task; and
data obtained through a privacy protection on data from an event-triggered collection in a case that the task type indicated in the task type indication information is the event-based task.

In this implementation, data demands of the AF under different periodicity requirements are satisfied, so that the data demand of the AF is satisfied more desirably, thereby helping the AF provide better services based on the required data.

In some embodiments, the task request includes QoS requirement indication information. The QoS requirement indication information is used to indicate a QoS parameter required for a task.

The method further includes:
The first core network node sends QoS execution indication information to the AF. The QoS execution indication information is used to indicate a QoS parameter executed for the target data.

In this implementation, if the task request carries the QoS requirement indication information, for example, a QoS level requirement, the core network may try to perform data processing based on the QoS level requirement, and notify the AF of a QoS level parameter that is achieved. The QoS level parameter achieved herein may refer to an actual QoS level achieved by the second core network node. If the QoS parameter that is achieved is different from the QoS parameter in the task request, the AF may be further notified of specific parameters that are not satisfied.

In an example, the QoS parameter indicated in the QoS execution indication information sent by the first core network node to the AF may be carried in the reply message sent by the second core network node to the first core network node.

In this implementation, the QoS execution indication information is sent to the AF, so that the AF learns the QoS parameter of the core network for the relevant task request. Therefore, in a case that the QoS parameter of the task request of the AF does not match the QoS parameter of the core network for task execution, the AF adjusts the QoS parameter of the task request in a timely manner.

In some embodiments, the method further includes:
The first core network node sends failure indication information to the AF in a case that the first core network node fails to perform the process of sending the target data to the AF. The failure indication information is used to indicate one or more of a failure reason and a rollback time. The rollback time is used to indicate a time and/or a time interval for the AF to re-initiate the task request.

In some embodiments, the method further includes:
The first core network node receives first failure indication information sent by a second core network node. The first failure indication information is used to indicate one or more of the failure reason, the rollback time, and privacy protection node indication information. The privacy protection node indication information is used to indicate an address of an alternative privacy protection node. The second core network node is a node configured to perform a privacy protection on data.

The first core network node sends second failure indication information to the AF. The second failure indication information is used to indicate one or more of the failure reason and the rollback time.

Further, in a case that the first failure indication information includes the privacy protection node indication information, the first core network node may select a new privacy protection node to perform a privacy protection on the data required by the AF based on the privacy protection node indication information. For a specific process of the privacy protection, refer to the description of this embodiment of this application. To avoid repetition, details are not described herein.

In some embodiments, the method further includes:
The first core network node sends a first request to a second core network node. The first request includes indication information of the task request. The second core network node is a node configured to perform a privacy protection on data.

The first core network node receives target data sent by the second core network node. The target data is data obtained by the second core network node through a privacy protection.

In this implementation, the second core network node is arranged to perform the privacy protection on the data, and the first core network node is arranged to interact with the AF, to separately work for the entire data processing, which helps improve data processing efficiency.

To better understand the data processing in this embodiment of this application, the complete data processing is described below by using an example based on the framework of the wireless communication system shown in FIG 3.

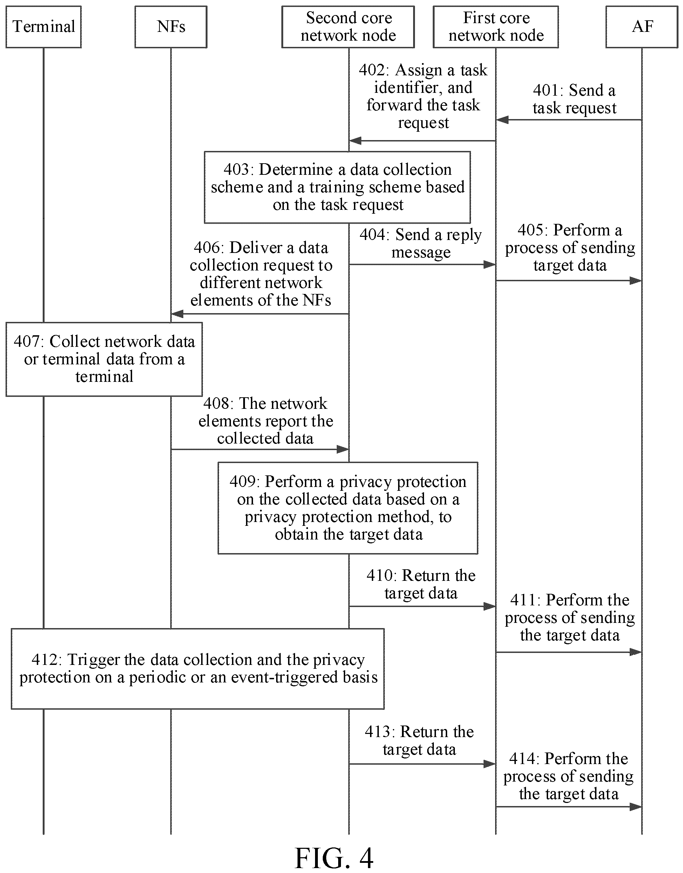

As shown in FIG. 4, the data processing method includes the following steps:
Step 401: An AF sends a task request to a first core network node. If the first core network node determines that the task request is valid, step 402 is performed. Otherwise, the task request is directly rejected.
Step 402: The first core network node assigns a task identifier, and forwards the task request to a second core network node.
Step 403: The second core network node determines a data collection scheme and a training scheme based on the task request. If a database stores target data that satisfies a demand of the AF, step 404 to step 405 are performed. Otherwise, step 406 to step 411 are performed. If the task request carries task type indication information, and an indicated task type includes a periodic task or an event-based task, step 412 to step 414 are performed.
Step 404: The second core network node sends a reply message to the first core network node.
Step 405: The first core network node performs a process of sending target data to the AF.
Step 406: The second core network node delivers a data collection request to different network elements of an NFs.
Step 407: The network elements of the NFs collect network data or terminal data from a terminal.
Step 408: The network elements of the NFs report the collected data to the second core network node.
Step 409: The second core network node performs a privacy protection on the collected data based on a privacy protection method, to obtain the target data.
Step 410: The second core network node returns the target data to the first core network node.
Step 411: The first core network node performs the process of sending the target data to the AF.
Step 412: The NFs and the second core network node trigger the data collection and the privacy protection on a periodic or an event-triggered basis
Step 413: The second core network node returns the target data to the first core network node periodically or based on an event.
Step 414: The first core network node performs the process of sending the target data to the AF periodically or based on an event.

In summary, in this embodiment of this application, through the sending of the data obtained through the privacy protection to the AF, not only privacy security of the data can be ensured, but also the data demand of the AF is satisfied, thereby helping the AF provide better services based on the required data.

The data processing method provided in this embodiment of this application may be performed by a data processing apparatus. In embodiments of this application, the data processing apparatus provided in embodiments of this application is described by using an example in which the data processing apparatus performs the data processing method.

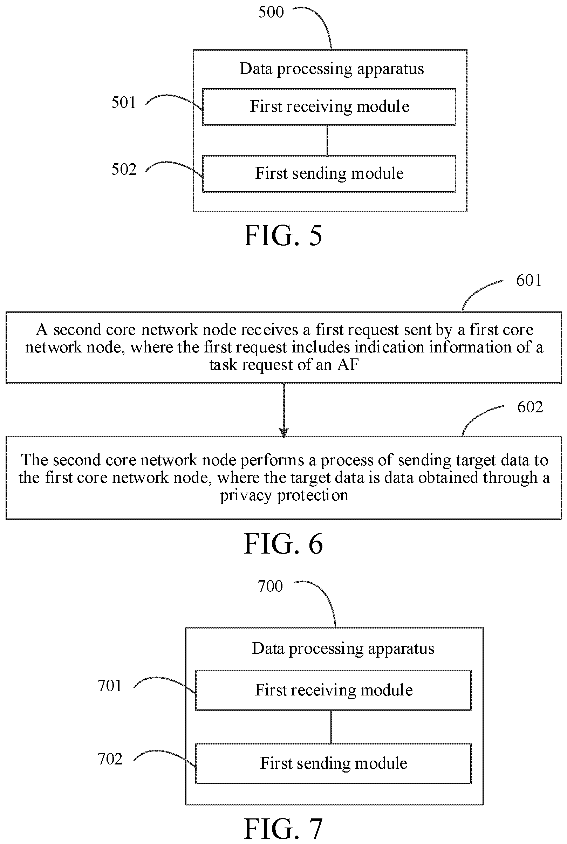

FIG. 5 is a schematic structural diagram of a data processing apparatus according to an embodiment of this application. As shown in FIG. 5, a data processing apparatus 500 includes:
a first receiving module 501, configured to receive a task request sent by an application function AF; and
a first sending module 502, configured to perform a process of sending target data to the AF, where the target data is data obtained through a privacy protection.

In some embodiments, the task request includes a task identifier. The task identifier is used to indicate whether the task request needs a privacy protection.

The first sending module 502 is specifically configured to:
perform the process of sending the target data to the AF in a case that the task identifier indicates that the task request needs a privacy protection.

In some embodiments, the data processing apparatus 500 further includes:
an obtaining module, configured to obtain a privacy protection agreement with the AF, where the privacy protection agreement includes one or more of the following:
an identifier of the AF;
privacy protection method indication information, where the privacy protection method indication information is used to indicate at least one privacy protection method;
data processing rule indication information, where the data processing rule indication information is used to indicate at least one data processing rule;
service demand indication information, where the service demand indication information is used to indicate at least one service demand;
sample indication information, where the sample indication information is used to indicate at least one sample collection parameter; and
quality of service QoS requirement indication information, where the QoS requirement indication information is used to indicate at least one QoS requirement.

In some embodiments, the data processing apparatus 500 further includes:
an updating module, configured to update the privacy protection agreement with the AF.

In some embodiments, the target data includes at least one of the following:
data stored in a database that satisfies the task request and on which a privacy protection is performed; and
data obtained through a first privacy protection on first data, where the first data is data collected based on the task request, and the first privacy protection is a privacy protection determined based on the task request.

In some embodiments, the task request includes data processing rule indication information. The data processing rule indication information is used to indicate a data processing rule. The data processing rule is used to perform a privacy protection on data.

The target data includes:
the data obtained through the privacy protection performed based on the data processing rule.

In some embodiments, the task request includes service demand indication information. The service demand indication information is used to indicate a service demand.

The target data includes:
data obtained through a privacy protection performed based on a target data processing rule, where target data processing rule is a data processing rule determined based on the service demand indication information.

In some embodiments, the target data processing rule includes at least one of the following:
a data processing rule stored in a database and indicated in the service demand indication information; and
a data processing rule determined based on a preset mapping rule and having a mapping relationship with the service demand indication information.

In some embodiments, the task request includes task type indication information. The task type indication information is used to indicate that a task type includes at least one of a periodic task, an event-based task, and a one-time task.

The target data includes at least one of the following:
periodic data obtained through a privacy protection on data from a periodic collection in a case that the task type indicated in the task type indication information is the periodic task; and
data obtained through a privacy protection on data from an event-triggered collection in a case that the task type indicated in the task type indication information is the event-based task.

In some embodiments, the task request includes QoS requirement indication information. The QoS requirement indication information is used to indicate a QoS parameter required for a task.

The data processing apparatus 500 further includes:
a second sending module, configured to send QoS execution indication information to the AF, where the QoS execution indication information is used to indicate a QoS parameter executed for the target data.

In some embodiments, the data processing apparatus 500 further includes:
a third sending module, configured to send failure indication information to the AF in a case that the first core network node fails to perform the process of sending the target data to the AF, where the failure indication information is used to indicate one or more of a failure reason and a rollback time, and the rollback time is used to indicate a time and/or a time interval for the AF to re-initiate the task request.

In some embodiments, the data processing apparatus 500 further includes:
a second receiving module, configured to receive first failure indication information sent by a second core network node, where the first failure indication information is used to indicate one or more of the failure reason, the rollback time, and privacy protection node indication information, the privacy protection node indication information is used to indicate an address of an alternative privacy protection node, and the second core network node is a node configured to perform a privacy protection on data; and
a fourth sending module, configured to send second failure indication information sent to the AF, where the second failure indication information is used to indicate one or more of the failure reason and the rollback time.

In some embodiments, the data processing apparatus 500 further includes:
a fifth sending module, configured to send a first request to the second core network node, where the first request includes indication information of the task request, and the second core network node is a node configured to perform a privacy protection on data; and
a third receiving module, configured to receive target data sent by the second core network node, where the target data is data obtained by the second core network node through a privacy protection.

In some embodiments, the first core network node is an exposed node of a core network, and the exposed node is a node configured to expose a privacy protection capability of the core network to the AF.

In summary, in this embodiment of this application, through the sending of the data obtained through the privacy protection to the AF, not only privacy security of the data can be ensured, but also a data demand of the AF is satisfied, thereby helping the AF provide better services based on the required data.

The data processing apparatus in this embodiment of this application may be an electronic device, for example, an electronic device having an operating system, or may be a component in the electronic device, for example, an integrated circuit or a chip. The electronic device may be a terminal, or may be another device other than the terminal. In an example, the terminal may include but is not limited to the above listed types of the terminal 11, and the another device may be a server, a network attached storage (Network Attached Storage, NAS), or the like. This is not specifically limited in this embodiment of this application.

The data processing apparatus provided in this embodiment of this application can implement processes implemented in the method embodiments of FIG. 2 to FIG. 4, and achieve the same technical effects. To avoid repetition, details are not described herein.

FIG. 6 is a flowchart of another data processing method according to an embodiment of this application. As shown in FIG. 6, the data processing method includes the following steps:
Step 601: A second core network node receives a first request sent by a first core network node, where the first request includes indication information of a task request of an AF.
Step 602: The second core network node performs a process of sending target data to the first core network node, where the target data is data obtained through a privacy protection.

In some embodiments, the task request includes a task identifier. The task identifier is used to indicate whether the task request needs a privacy protection.

That the second core network node performs a process of sending target data to the first core network node includes:
The second core network node performs the process of sending the target data to the first core network node in a case that the task identifier indicates that the task request needs a privacy protection.

In some embodiments, before the second core network node performs a process of sending target data to the first core network node, the method further includes:
The second core network node queries a database to determine whether the database stores data that satisfies the task request and on which a privacy protection is performed.

The second core network node determines the data stored in the database as the target data in a case that the database stores the data that satisfies the task request and on which the privacy protection is performed.

In some embodiments, before the second core network node performs a process of sending target data to the first core network node, the method further includes:
The second core network node performs a first privacy protection on first data, to obtain the target data, where the first data is data collected based on the task request, and the first privacy protection is a privacy protection determined based on the task request.

In some embodiments, before the second core network node performs a first privacy protection on the first data, the method further includes:
The second core network node sends a data collection request to a core network element, where the data collection request is used to instruct the core network element to collect the first data.

The second core network node receives the first data sent by the core network element.

In some embodiments, the task request includes data processing rule indication information. The data processing rule indication information is used to indicate a data processing rule. The data processing rule is used to perform the first privacy protection on the data.

Before the second core network node performs a first privacy protection on the first data, the method further includes:
The second core network node determines the first privacy protection based on the data processing rule.

In some embodiments, the task request includes service demand indication information. The service demand indication information is used to indicate a service demand.

Before the second core network node performs a first privacy protection on the first data, the method further includes:
The second core network node determines a target data processing rule based on the service demand indication information.

The second core network node determines the first privacy protection based on the target data processing rule.

In some embodiments, that the second core network node determines a target data processing rule based on the service demand indication information includes at least one of the following:
The second core network node queries a database to determine whether the database stores a data processing rule indicated in the service demand indication information.

The second core network node determines a data processing rule having a mapping relationship with the service demand indication information based on a preset mapping rule.

In some embodiments, the task request includes task type indication information. The task type indication information is used to indicate that a task type includes at least one of a periodic task, an event-based task, and a one-time task.

That the second core network node performs a first privacy protection on first data includes:
The second core network node performs the first privacy protection on first data from a periodic collection in a case that the task type indicated in the task type indication information is the periodic task.

The second core network node performs the first privacy protection on first data from an event-triggered collection in a case that the task type indicated in the task type indication information is the event-based task.

**In** some embodiments, the task request includes quality of service QoS requirement indication information. The QoS requirement indication information is used to indicate a QoS parameter required for a task.

The method further includes:
The second core network node sends QoS execution indication information to the first core network node, where the QoS execution indication information is used to indicate a QoS parameter executed by the second core network node to perform the first privacy protection on the first data.

**In** some embodiments, the method further includes:
The second core network node sends failure indication information to the first core network node in a case that the second core network node fails to perform the process of sending the target data to the first core network node, where the failure indication information is used to indicate one or more of a failure reason, a rollback time, and privacy protection node indication information, the rollback time is used to indicate a time and/or a time interval for the AF to re-initiate the task request, and the privacy protection node indication information is used to indicate an address of an alternative privacy protection node.

**In** some embodiments, before the second core network node receives a first request sent by the first core network node, the method further includes:
The second core network node obtains a privacy protection agreement with the AF, where the privacy protection agreement includes one or more of the following:
an identifier of the AF;
privacy protection method indication information, where the privacy protection method indication information is used to indicate at least one privacy protection method;
data processing rule indication information, where the data processing rule indication information is used to indicate at least one data processing rule;
service demand indication information, where the service demand indication information is used to indicate at least one service demand;
sample indication information, where the sample indication information is used to indicate at least one sample collection parameter; and
QoS requirement indication information, where the QoS requirement indication information is used to indicate at least one QoS requirement.

In some embodiments, after the second core network node obtains a privacy protection agreement with the AF, the method further includes:
The second core network node updates the privacy protection agreement with the AF.

In this embodiment of this application, in a case that the second core network receives the first request sent by the first core network node, the second core network node performs the process of sending the target data to the first core network node, so that the AF can obtain the target data. The target data is the data obtained through the privacy protection. Because the target data is obtained through the privacy protection, the target data includes no privacy information. In this way, not only privacy security of the data can be ensured, but also a data demand of the AF is satisfied, thereby helping the AF provide better services based on the required data.

For relevant description of this embodiment of this application, refer to the method embodiments of FIG. 2 to FIG. 4, and the same technical effects can be achieved. To avoid repetition, details are not described.

The data processing method provided in this embodiment of this application may be performed by a data processing apparatus. In embodiments of this application, the data processing apparatus provided in embodiments of this application is described by using an example in which the data processing apparatus performs the data processing method.

FIG. 7 is a schematic structural diagram of a data processing apparatus according to an embodiment of this application. As shown in FIG. 7, a data processing apparatus 700 includes:
a first receiving module 701, configured to receive a first request sent by a first core network node, where the first request includes indication information of a task request of an AF; and
a first sending module 702, configured to perform a process of sending target data to the first core network node, where the target data is data obtained through a privacy protection.

In some embodiments, the task request includes a task identifier. The task identifier is used to indicate whether the task request needs a privacy protection.

The first sending module 702 is specifically configured to:
perform the process of sending the target data to the first core network node in a case that the task identifier indicates that the task request needs a privacy protection.

In some embodiments, the data processing apparatus 700 further includes:
a query module, configured to query a database to determine whether the database stores data that satisfies the task request and on which a privacy protection is performed; and
a first determining module, configured to determine the data stored in the database as the target data in a case that the database stores the data that satisfies the task request and on which the privacy protection is performed.

In some embodiments, the data processing apparatus 700 further includes:
a processing module, configured to perform a first privacy protection on first data, to obtain the target data, where the first data is data collected based on the task request, and the first privacy protection is a privacy protection determined based on the task request.

In some embodiments, the data processing apparatus 700 further includes:
a second sending module, configured to send a data collection request to a core network element, where the data collection request is used to instruct the core network element to collect the first data; and
a second receiving module, configured to receive the first data sent by the core network element.

In some embodiments, the task request includes data processing rule indication information. The data processing rule indication information is used to indicate a data processing rule. The data processing rule is used to perform the first privacy protection on the data.

The data processing apparatus 700 further includes:
a second determining module, configured to determine, by a second core network node, the first privacy protection based on the data processing rule.

In some embodiments, the task request includes service demand indication information. The service demand indication information is used to indicate a service demand.

The data processing apparatus 700 further includes:
a third determining module, configured to determine a target data processing rule based on the service demand indication information; and
a fourth determining module, configured to determine the first privacy protection based on the target data processing rule.

In some embodiments, the third determining module is specifically configured to perform at least one of the following:
querying a database to determine whether the database stores a data processing rule indicated in the service demand indication information; and
determining a data processing rule having a mapping relationship with the service demand indication information based on a preset mapping rule.

In some embodiments, the task request includes task type indication information. The task type indication information is used to indicate that a task type includes at least one of a periodic task, an event-based task, and a one-time task.

The processing module is specifically configured to perform at least one of the following:
performing the first privacy protection on first data from a periodic collection in a case that the task type indicated in the task type indication information is the periodic task; and
performing the first privacy protection on first data from an event-triggered collection in a case that the task type indicated in the task type indication information is the event-based task.

In some embodiments, the task request includes quality of service QoS requirement indication information. The QoS requirement indication information is used to indicate a QoS parameter required for a task.

The data processing apparatus 700 further includes:
a third sending module, configured to send QoS execution indication information to the first core network node, where the QoS execution indication information is used to indicate a QoS parameter executed by the second core network node to perform the first privacy protection on the first data.

In some embodiments, the data processing apparatus 700 further includes:
a fourth sending module, configured to send failure indication information to the first core network node in a case that the process of sending the target data to the first core network node fails, where the failure indication information is used to indicate one or more of a failure reason, a rollback time, and privacy protection node indication information, the rollback time is used to indicate a time and/or a time interval for the AF to re-initiate the task request, and the privacy protection node indication information is used to indicate an address of an alternative privacy protection node.

In some embodiments, the data processing apparatus 700 further includes:
an obtaining module, configured to obtain a privacy protection agreement with the AF, where the privacy protection agreement includes one or more of the following:
an identifier of the AF;
privacy protection method indication information, where the privacy protection method indication information is used to indicate at least one privacy protection method;
data processing rule indication information, where the data processing rule indication information is used to indicate at least one data processing rule;
service demand indication information, where the service demand indication information is used to indicate at least one service demand;
sample indication information, where the sample indication information is used to indicate at least one sample collection parameter; and
QoS requirement indication information, where the QoS requirement indication information is used to indicate at least one QoS requirement.

In some embodiments, the data processing apparatus 700 further includes:
an updating module, configured to update the privacy protection agreement with the AF.

In summary, in this embodiment of this application, through the process of sending the target data to the first core network node, the AF can obtain the target data. In this way, not only privacy security of the data can be ensured, but also a data demand of the AF is satisfied, thereby helping the AF provide better services based on the required data.

The data processing apparatus in this embodiment of this application may be an electronic device, for example, an electronic device having an operating system, or may be a component in the electronic device, for example, an integrated circuit or a chip. The electronic device may be a terminal, or may be another device other than the terminal. In an example, the terminal may include but is not limited to the above listed types of the terminal 11, and the another device may be a server, a network attached storage (Network Attached Storage, NAS), or the like. This is not specifically limited in this embodiment of this application.

The data processing apparatus provided in this embodiment of this application can implement processes implemented in the method embodiment of FIG. 6, and achieve the same technical effects. To avoid repetition, details are not described herein.

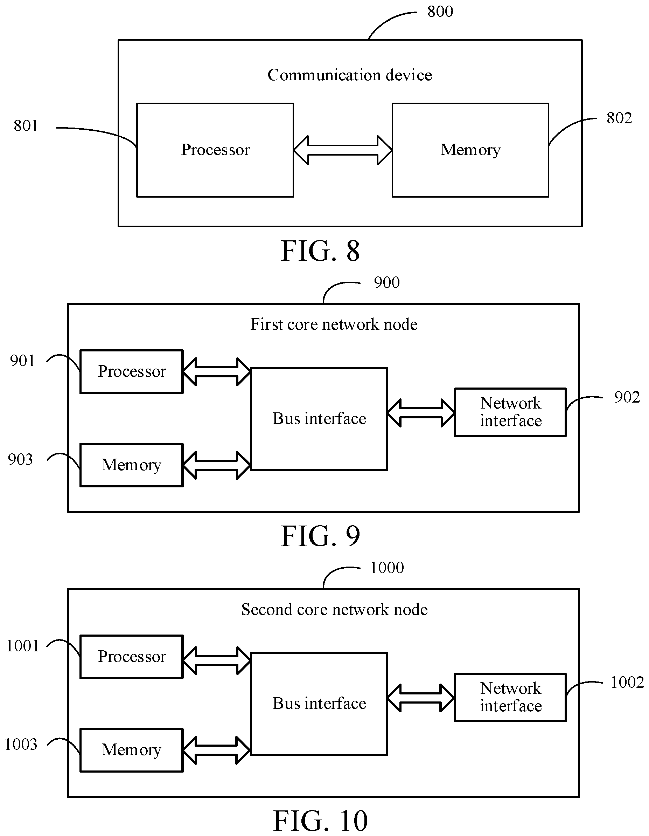

Optionally, as shown in FIG. 8, an embodiment of this application further provides a communication device 800. The communication device includes a processor 801 and a memory 802. The memory 802 stores a program or instructions executable in the processor 801. For example, when the communication device 800 is a first core network node, the program or the instructions, when executed by the processor 801, implement the above embodiment of the data processing method in FIG. 2, and can achieve the same technical effects. When the communication device 800 is a second core network node, the program or the instructions, when executed by the processor 801, implement the above embodiment of the data processing method in FIG. 6, and can achieve the same technical effects. To avoid repetition, details are not described herein.

An embodiment of this application further provides a first core network node. The first core network node includes a processor and a communication interface. The communication interface is configured to: receive a task request sent by an application function AF; and perform a process of sending target data to the AF, where the target data is data obtained through a privacy protection. The embodiment of the first core network node corresponds to the above method embodiment of the first core network node side. The implementation processes and manners of the above method embodiment are applicable to the embodiment of the first core network node, and the same technical effects can be achieved. Specifically, FIG. 9 is a schematic diagram of a hardware structure of a first core network node that implements an embodiment of this application.

As shown in FIG. 9, a first core network node 900 includes a processor 901, a network interface 902, and a memory 903. The network interface 902 is, for example, a common public radio interface (common public radio interface, CPRI).

Specifically, the first core network node 900 in this embodiment of this application further includes instructions or a program stored in the memory 903 and executable in the processor 901. The processor 901 calls the instructions or the program in the memory 903 to perform the method performed by the modules shown in FIG. 5, and the same technical effects can be achieved. To avoid repetition, details are not described herein.

An embodiment of this application further provides a second core network node. The second core network node includes a processor and a communication interface. The communication interface is configured to: receive a first request sent by a first core network node, where the first request includes indication information of a task request of an AF; and perform a process of sending target data to the first core network node, where the target data is data obtained through a privacy protection. The embodiment of the second core network node corresponds to the above method embodiment of the second core network node side. The implementation processes and manners of the above method embodiment are applicable to the embodiment of the second core network node, and the same technical effects can be achieved. Specifically, FIG. 10 is a schematic diagram of a hardware structure of a second core network node that implements an embodiment of this application.

As shown in FIG. 10, a second core network node 1000 includes a processor 1001, a network interface 1002, and a memory 1003. The network interface 1002 is, for example, a common public radio interface (common public radio interface, CPRI).

Specifically, the second core network node 1000 in this embodiment of this application further includes instructions or a program stored in the memory 1003 and executable in the processor 1001. The processor 1001 calls the instructions or the program in the memory 1003 to perform the method performed by the modules shown in FIG. 7, and the same technical effects can be achieved. To avoid repetition, details are not described herein.

An embodiment of this application further provides a readable storage medium. The readable storage medium stores a program or instructions. The program or the instructions, when executed by a processor, implements the processes of the above embodiments of the data processing method, and can achieve the same technical effects. To avoid repetition, details are not described herein.

The processor is a processor in the terminal described in the above embodiments. The readable storage medium includes a computer-readable storage medium, such as a computer read-only memory ROM, a random access memory RAM, a magnetic disk, or an optical disk.

An embodiment of this application further provides a chip. The chip includes a processor and a communication interface. The communication interface is coupled to the processor. The processor is configured to run a program or instructions, to implement the processes of the above embodiments of the data processing method, and can achieve the same technical effects. To avoid repetition, details are not described herein.

It should be understood that the chip in this embodiment of this application may also be referred to as a system level chip, a system chip, a chip system, a system on chip, or the like.

An embodiment of this application further provides a computer program/program product. The computer program/program product is stored in a storage medium. The computer program/program product is executed by at least one processor to implement the processes in the above embodiments of the data processing method, and can achieve the same technical effects. To avoid repetition, details are not described herein.

An embodiment of this application further provides a communication system. The communication system includes a first core network node and a second core network node. The first core network node may be configured to perform the above data processing method. The second core network node may be configured to perform the above data processing method.

It should be noted that, the term "comprise", "include", or any other variant herein is intended to encompass non-exclusive inclusion, so that a process, a method, an article, or an apparatus including a series of elements not only includes those elements, but also includes another element not listed explicitly, or includes intrinsic elements for the process, the method, the article, or the apparatus. Without any further limitation, an element defined by a phrase "include one ..." does not exclude existence of an additional same element in the process, the method, the article, or the apparatus that includes the element. In addition, it should be noted that scope of the method and the apparatus in the implementations of this application is not limited to function execution in the order shown or discussed, and may further include function execution in a substantially simultaneous manner or in opposite order based on the functions. For example, the described method may be performed in different order from the described order, and various steps may also be added, omitted, or combined. In addition, features described with reference to some examples may be combined in another example.

According to the descriptions of the above implementations, a person skilled in the art may clearly learn that the method in the above embodiments may be implemented by software with a necessary universal hardware platform, or may be implemented by hardware. However, in many cases, the software with a necessary universal hardware platform is a preferred implementation. Based on such an understanding, the technical solutions of this application, in essence, or a part contributing to the prior art may be embodied in a form of a computer software product. The computer software product is stored in a storage medium (such as a ROM/RAM, a magnetic disk, or an optical disk), including a plurality of instructions for causing a terminal (which may be a mobile phone, a computer, a server, an air conditioner, a network device, or the like) to perform the methods in embodiments of this application.

Although embodiments of this application are described above with reference to the drawings, this application is not limited to the specific implementations described above. The above specific implementations are illustrative rather than restrictive. With the enlightenment of this application, a person of ordinary skill in the art may make many forms without departing from the concept of this application and the protection scope of the claims. These forms fall within the protection of this application.

## Claims

1. A data processing method, comprising:
receiving, by a first core network node, a task request sent by an application function AF; and
performing, by the first core network node, a process of sending target data to the AF, wherein the target data is data obtained through a privacy protection.

2. The method according to claim 1, wherein the task request comprises a task identifier, and the task identifier is used to indicate whether the task request needs a privacy protection; and
the performing, by the first core network node, a process of sending target data to the AF comprises:
performing, by the first core network node, the process of sending the target data to the AF in a case that the task identifier indicates that the task request needs a privacy protection.

3. The method according to claim 1 or 2, wherein before the receiving, by a first core network node, a task request sent by an AF, the method further comprises:
obtaining, by the first core network node, a privacy protection agreement with the AF, wherein the privacy protection agreement comprises one or more of the following:
an identifier of the AF;
privacy protection method indication information, wherein the privacy protection method indication information is used to indicate at least one privacy protection method;
data processing rule indication information, wherein the data processing rule indication information is used to indicate at least one data processing rule;
service demand indication information, wherein the service demand indication information is used to indicate at least one service demand;
sample indication information, wherein the sample indication information is used to indicate at least one sample collection parameter; and
quality of service QoS requirement indication information, wherein the QoS requirement indication information is used to indicate at least one QoS requirement.

4. The method according to claim 3, wherein after the obtaining, by the first core network node, a privacy protection agreement with the AF, the method further comprises:
updating, by the first core network node, the privacy protection agreement with the AF.

5. The method according to claim 1, wherein the target data comprises at least one of the following:
data stored in a database that satisfies the task request and on which a privacy protection is performed; and
data obtained through a first privacy protection on first data, wherein the first data is data collected based on the task request, and the first privacy protection is a privacy protection determined based on the task request.

6. The method according to claim 1, wherein the task request comprises data processing rule indication information, the data processing rule indication information is used to indicate a data processing rule, and the data processing rule is used to perform a privacy protection on data; and
the target data comprises:
the data obtained through the privacy protection performed based on the data processing rule.

7. The method according to claim 1, wherein the task request comprises service demand indication information, and the service demand indication information is used to indicate a service demand; and
the target data comprises:
data obtained through a privacy protection performed based on a target data processing rule, wherein the target data processing rule is a data processing rule determined based on the service demand indication information.

8. The method according to claim 7, wherein the target data processing rule comprises at least one of the following:
a data processing rule stored in a database and indicated in the service demand indication information; and
a data processing rule determined based on a preset mapping rule and having a mapping relationship with the service demand indication information.

9. The method according to claim 1, wherein the task request comprises task type indication information, the task type indication information is used to indicate that a task type comprises at least one of a periodic task, an event-based task, and a one-time task; and
the target data comprises at least one of the following:
periodic data obtained through a privacy protection on data from a periodic collection in a case that the task type indicated in the task type indication information is the periodic task; and
data obtained through a privacy protection on data from an event-triggered collection in a case that the task type indicated in the task type indication information is the event-based task.

10. The method according to claim 1, wherein the task request comprises QoS requirement indication information, and the QoS requirement indication information is used to indicate a QoS parameter required for a task; and
the method further comprises:
sending, by the first core network node, QoS execution indication information to the AF, wherein the QoS execution indication information is used to indicate a QoS parameter executed for the target data.

11. The method according to any one of claims 1 to 10, further comprising:
sending, by the first core network node, failure indication information to the AF in a case that the first core network node fails to perform the process of sending the target data to the AF, wherein the failure indication information is used to indicate one or more of a failure reason and a rollback time, and the rollback time is used to indicate a time and/or a time interval for the AF to re-initiate the task request.

12. The method according to claim 11, further comprising:
receiving, by the first core network node, first failure indication information sent by a second core network node, wherein the first failure indication information is used to indicate one or more of the failure reason, the rollback time, and privacy protection node indication information, the privacy protection node indication information is used to indicate an address of an alternative privacy protection node, and the second core network node is a node configured to perform a privacy protection on data; and
sending, by the first core network node, second failure indication information to the AF, wherein the second failure indication information is used to indicate one or more of the failure reason and the rollback time.

13. The method according to any one of claims 1 to 10, further comprising:
sending, by the first core network node, a first request to a second core network node, wherein the first request comprises indication information of the task request, and the second core network node is a node configured to perform a privacy protection on data; and
receiving, by the first core network node, target data sent by the second core network node, wherein the target data is data obtained by the second core network node through a privacy protection.

14. The method according to claim 1, wherein the first core network node is an exposed node of a core network, and the exposed node is a node configured to expose a privacy protection capability of the core network to the AF.

15. A data processing method, comprising:
receiving, by a second core network node, a first request sent by a first core network node, wherein the first request comprises indication information of a task request of an AF; and
performing, by the second core network node, a process of sending target data to the first core network node, wherein the target data is data obtained through a privacy protection.

16. The method according to claim 15, wherein the task request comprises a task identifier, and the task identifier is used to indicate whether the task request needs a privacy protection; and
the performing, by the second core network node, a process of sending target data to the first core network node comprises:
performing, by the second core network node, the process of sending the target data to the first core network node in a case that the task identifier indicates that the task request needs a privacy protection.

17. The method according to claim 15 or 16, wherein before the performing, by the second core network node, a process of sending target data to the first core network node, the method further comprises:
querying, by the second core network node, a database to determine whether the database stores data that satisfies the task request and on which a privacy protection is performed; and
determining, by the second core network node, the data stored in the database as the target data in a case that the database stores the data that satisfies the task request and on which the privacy protection is performed.

18. The method according to claim 15 or 16, wherein before the performing, by the second core network node, a process of sending target data to the first core network node, the method further comprises:
performing, by the second core network node, a first privacy protection on first data, to obtain the target data, wherein the first data is data collected based on the task request, and the first privacy protection is a privacy protection determined based on the task request.

19. The method according to claim 18, wherein before the performing, by the second core network node, a first privacy protection on first data, the method further comprises:
sending, by the second core network node, a data collection request to a core network element, wherein the data collection request is used to instruct the core network element to collect the first data; and
receiving, by the second core network node, the first data sent by the core network element.

20. The method according to claim 18, wherein the task request comprises data processing rule indication information, the data processing rule indication information is used to indicate a data processing rule, and the data processing rule is to perform the first privacy protection on the data; and
before the performing, by the second core network node, a first privacy protection on first data, the method further comprises:
determining, by the second core network node, the first privacy protection based on the data processing rule.

21. The method according to claim 18, wherein the task request comprises service demand indication information, and the service demand indication information is used to indicate a service demand; and
before the performing, by the second core network node, a first privacy protection on first data, the method further comprises:
determining, by the second core network node, a target data processing rule based on the service demand indication information; and
determining, by the second core network node, the first privacy protection based on the target data processing rule.

22. The method according to claim 21, wherein the determining, by the second core network node, a target data processing rule based on the service demand indication information comprises at least one of the following:
querying, by the second core network node, a database to determine whether the database stores a data processing rule indicated in the service demand indication information; and
determining, by the second core network node, a data processing rule having a mapping relationship with the service demand indication information based on a preset mapping rule.

23. The method according to claim 18, wherein the task request comprises task type indication information, the task type indication information is used to indicate that a task type comprises at least one of a periodic task, an event-based task, and a one-time task; and
the performing, by the second core network node, a first privacy protection on first data comprises at least one of the following:
performing, by the second core network node, the first privacy protection on first data from a periodic collection in a case that the task type indicated in the task type indication information is the periodic task; and
performing, by the second core network node, the first privacy protection on first data from an event-triggered collection in a case that the task type indicated in the task type indication information is the event-based task.

24. The method according to claim 18, wherein the task request comprises quality of service QoS requirement indication information, wherein the QoS requirement indication information is used to indicate a QoS parameter required for a task; and
the method further comprises:
sending, by the second core network node, QoS execution indication information to the first core network node, wherein the QoS execution indication information is used to indicate a QoS parameter executed for the second core network node to perform the first privacy protection on the first data.

25. The method according to any one of claims 15 to 24, further comprising:
sending, by the second core network node, failure indication information to the first core network node in a case that the second core network node fails to perform the process of sending the target data to the first core network node, wherein the failure indication information is used to indicate one or more of a failure reason, a rollback time, and privacy protection node indication information, the rollback time is used to indicate a time and/or a time interval for the AF to re-initiate the task request, and the privacy protection node indication information is used to indicate an address of an alternative privacy protection node.

26. The method according to any one of claims 15 to 24, wherein before the receiving, by a second core network node, a first request sent by a first core network node, the method further comprises:
obtaining, by the second core network node, a privacy protection agreement with the AF, wherein the privacy protection agreement comprises one or more of the following:
an identifier of the AF;
privacy protection method indication information, wherein the privacy protection method indication information is used to indicate at least one privacy protection method;
data processing rule indication information, wherein the data processing rule indication information is used to indicate at least one data processing rule;
service demand indication information, wherein the service demand indication information is used to indicate at least one service demand;
sample indication information, wherein the sample indication information is used to indicate at least one sample collection parameter; and
QoS requirement indication information, wherein the QoS requirement indication information is used to indicate at least one QoS requirement.

27. The method according to claim 26, wherein after the obtaining, by the second core network node, a privacy protection agreement with the AF, the method further comprises:
updating, by the second core network node, the privacy protection agreement with the AF.

28. A data processing apparatus, comprising:
a first receiving module, configured to receive a task request sent by an application function AF; and
a first sending module, configured to perform a process of sending target data to the AF, wherein the target data is data obtained through a privacy protection.

29. A data processing apparatus, comprising:
a first receiving module, configured to receive a first request sent by a first core network node, wherein the first request comprises indication information of a task request of an AF; and
a first sending module, configured to perform a process of sending target data to the first core network node, wherein the target data is data obtained through a privacy protection.

30. A first core network node, comprising a memory and a processor, wherein the memory stores a program or instructions executable in the processor, and the program or the instructions, when executed by the processor, implement the data processing method according to any one of claims 1 to 14.

31. A second core network node, comprising a memory and a processor, wherein the memory stores a program or instructions executable in the processor, and the program or the instructions, when executed by the processor, implement the data processing method according to any one of claims 15 to 27.

32. A readable storage medium, storing a program or instructions, wherein the program or the instructions, when executed by a processor, implement the data processing method according to any one of claims 1 to 14, or implement the data processing method according to any one of claims 15 to 27.
